# EUROPEAN PATENT APPLICATION

(11) **EP 4 467 956 A1**
(43) Date of publication of application: **27.11.2024**
(21) Application number: 22921995.1
(22) Date of filing: 20.09.2022
(51) Int. Cl.: G01M 7/02, G01N 3/32

(54) **VIBRATION TESTING JIG**

(30) Priority: 21.01.2022 JP 2022007733
(71) Applicant: IHI Corporation, Tokyo 135-8710 (JP)
(72) Inventor: SHIOMI Kensuke, Tokyo 135-8710 (JP); OTOYO Teruyoshi, Tokyo 135-8710 (JP); INADA Takaomi, Tokyo 135-8710 (JP)
(74) Representative: MERH-IP Matias Erny Reichl Hoffmann Patentanwälte PartG mbB
(86) International application number: PCT/JP2022/034888
(87) International publication number: WO 2023/139842

(57) **Abstract**

A vibration test jig (10) includes: a base (11) installed on a vibration table, including a mounting surface (11a) on which the end of the test body is mounted; a top plate (12) placed on the base (11) with a gap therebetween, including a slot (16) and a wedge fitting groove (13), the slot (16) having an inner surface (16a) that presses the end of the test body toward the mounting surface (11a), and the wedge fitting groove (13) located in an extending direction of the slot (16) and communicating with the slot (16); a wedge portion (23) configured to be fit into the wedge fitting groove (13); and pressing members (14) arranged along the slot (16) and configured to press the top plate (12) toward the base (11). An inner surface of the wedge fitting groove (13) includes a bottom surface (13a) and a pair of holding surfaces (13s and 13s) located on both sides in a width direction of the wedge fitting groove (13) and facing the bottom surface (13a) across an inner space of the wedge fitting groove (13); and the wedge portion (23) is in surface contact with the bottom surface (13a) and the pair of holding surfaces (13s and 13s).

## Description

### TECHNICAL FIELD

The present disclosure relates to a vibration test jig that holds an end of a test body extending in a predetermined direction, such as a fan blade used in aircraft engines.

### BACKGROUND ART

A vibration test is one of the tests for evaluating the fatigue properties of a test body. In the vibration test, a test body is vibrated to be applied with constant stress. Generally, fatigue when the number of times leading to damage such as rupture (i.e., the number of cycles to rupture) is less than a predetermined value (e.g., 10⁴ times) is called low-cycle fatigue, and fatigue when this number exceeds the predetermined value (e.g., 10⁴ times) is called high-cycle fatigue. To assess the correlation between stress and the number of cycles to rupture, it is necessary to vibrate the test body for a long period of time, and the test duration often ranges from several days to several weeks.

Patent Literature 1 (PLT 1) discloses a vibration test jig for a rotor blade, which is attached to a vibration table of a vibration test apparatus. The jig of Patent Literature 1 includes a top plate and a jig body as a base fixed to a vibration table. The rotor blade is placed on a mounting base of the jig body with a root portion thereof positioned in a holding groove of the top plate. In addition, bolts are screwed into the jig body through the top plate. By tightening these bolts, the top plate moves toward the jig body, and as a result, the root portion is pressed against the mounting base. As a result, the root portion is held by the jig, and the vibration test can be performed.

### CITATION LIST

### PATENT LITERATURE

Patent Literature 1: WO 2020/208925 A1

### SUMMARY OF THE INVENTION

### TECHNICAL PROBLEM

In the vibration test jig according to PLT 1, the rotor blade is held by a load which is applied to the root portion of the rotor blade from the top plate toward the base. This load value is set depending on to the operating environment of the test body. For example, since the test body of Patent Literature 1 is a rotor blade, a very large load (e.g., 20 t) equivalent to centrifugal force is applied to the root portion of the rotor blade.

While vibrating the test body in a state where an end of the test body is held by the jig, a load applied to the end fluctuates in accordance with the vibration of the test body. Although the end of the test body is stably held by the jig during the test body is at rest, the load is reduced by deformation of the jig during the test body is vibrated, thereby the test body may move in the jig.

The present disclosure has been made in view of the above-mentioned circumstances, and an object of the present disclosure is to provide a vibration test jig capable of stably holding the test body even during vibration of the test body.

### TECHNICAL SOLUTION

A vibration test jig according to one aspect of the present disclosure is a jig for holding an end of a test body extending in a predetermined direction. The jig includes: a base installed on a vibration table, including a mounting surface on which the end of the test body is mounted; a top plate placed on the base with a gap therebetween, including a slot and a wedge fitting groove, the slot having an inner surface that presses the end of the test body toward the mounting surface, and the wedge fitting groove located in an extending direction of the slot and communicating with the slot; a wedge portion configured to be fit into the wedge fitting groove; and pressing members arranged along the slot and configured to press the top plate toward the base; wherein an inner surface of the wedge fitting groove includes a bottom surface and a pair of holding surfaces located on both sides in a width direction of the wedge fitting groove and facing the bottom surface across an inner space of the wedge fitting groove; and the wedge portion is in surface contact with the bottom surface and the pair of holding surfaces.

A cross-sectional shape of the wedge fitting groove may be included in a cross-sectional shape of the slot, when viewed from an extending direction of the slot. The pair of holding surfaces may be inclined with respect to the bottom surface. The pair of holding surfaces may be parallel to the bottom surface.

### EFFECT OF THE INVENTION

According to the present disclosure, it is possible to provide a vibration test jig capable of stably holding the test body even during vibration of the test body.

### BRIEF DESCRIPTION OF THE DRAWINGS

FIG. 1 is a perspective view of a fan blade as an example of a test body held in a jig according to the embodiment of the present disclosure.
FIG. 2 is a front view of the jig according to the embodiment of the present disclosure.
FIG. 3 is a top view of the jig according to the embodiment of the present disclosure.
FIG. 4 is a front view of a wedge fitting groove according to the present embodiment.
FIG. 5 is a front view of a top plate assuming a bent state.
FIG. 6A is a perspective view showing a state before the wedge portion according to the present embodiment is fitted into the wedge fitting groove of the top plate.
FIG. 6B is a front view showing a state after the wedge portion according to the present embodiment is fitted into the wedge fitting groove of the top plate.
FIG. 7A is a perspective view showing a state before the wedge portion according to a modification of the present embodiment is fitted into the wedge fitting groove of the top plate.
FIG. 7B is a front view showing a state after the wedge portion according to the modification of the present embodiment is fitted into the wedge fitting groove of the top plate.

### DESCRIPTION OF EMBODIMENTS

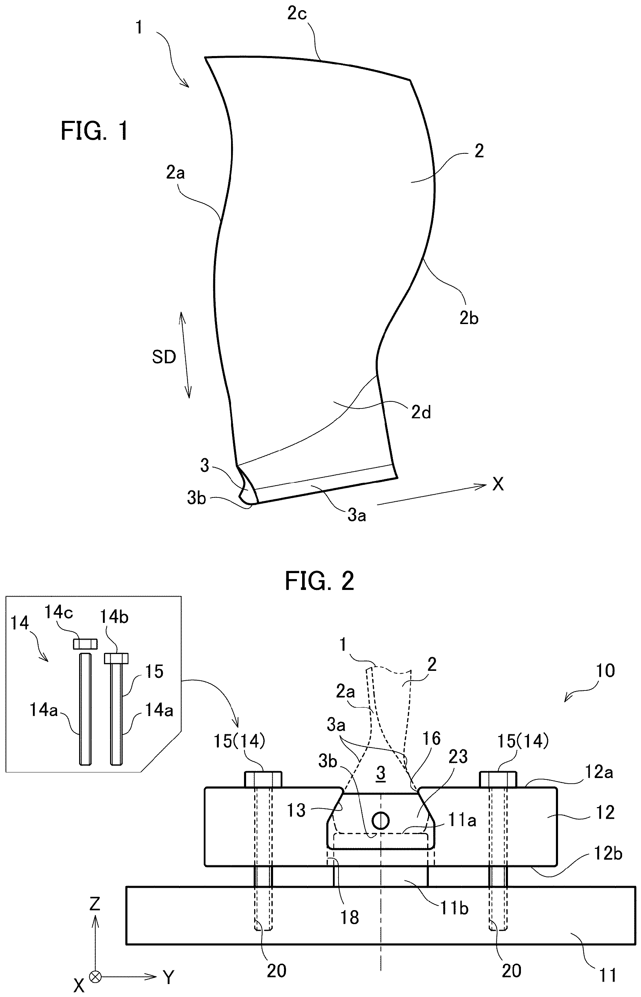

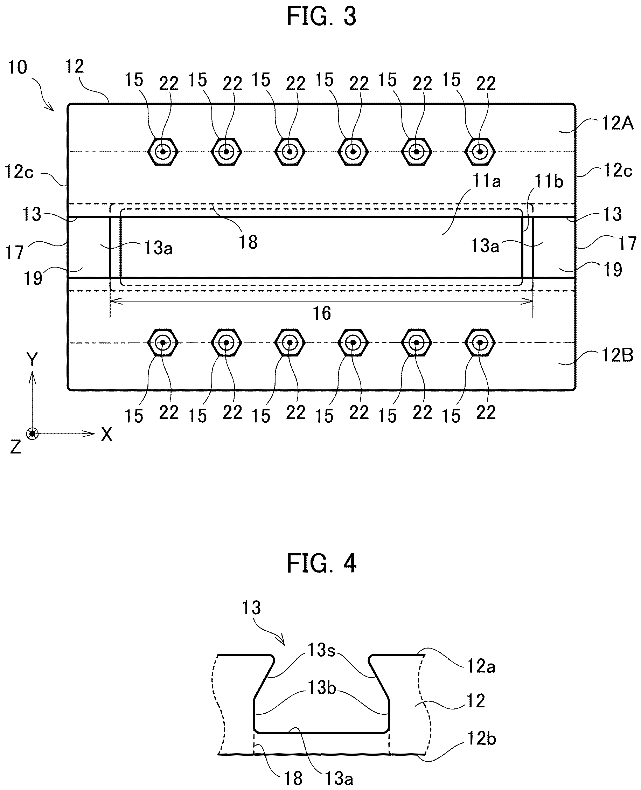

Hereinafter, a jig 10 according to an embodiment of the present disclosure will be described with reference to the drawings. FIG. 1 is a perspective view of a fan blade 1 which is an example of a test body will be held in the jig 10. FIG. 2 is a front view of the jig 10 according to the present embodiment. FIG. 3 is a top view of the jig 10. FIG. 4 is a front view of a wedge fitting groove 13 according to the present embodiment. For convenience of explanation, the illustration of a base 11 and a root portion 3 shown in FIG. 2 is omitted in in FIG. 3. Common parts in each figure are denoted by the same reference numerals, and duplicate explanations are omitted.

For convenience of explanation, the X, Y and Z directions orthogonal to each other are defined. The X and Y directions are parallel to a X-Y plane (virtual plane) including the vibration direction of the vibration table (not shown). The X direction is the extending direction of a slot 16 (see FIG. 3). The Z direction is orthogonal to the X and Y directions.

The jig 10 according to the present embodiment is mounted on a vibration table (not shown) of the vibration test apparatus and holds an end of a test body. The end of the test body has a cross-sectional shape that is pressed against the base 11 by the top plate 12. The test body is a so-called long piece and has an end that extends in the X direction and a body that extends from the end in a predetermined direction (e.g., Z direction) that crosses the X-Y plane. A fan blade 1 used in an aircraft engine such as a turbofan engine (not shown) will be described below as an example of the test body.

As shown in FIG. 1, the fan blade 1 as the test body includes a blade body 2 as a main body of the test body and a root portion 3 as an end of the test body. The blade body 2 and the root portion 3 are integrally formed. The blade body 2 has a leading edge 2a, a trailing edge 2b, a tip 2c, and a hub 2d. The blade body 2 extends from the root portion 3 to the tip 2c via the hub 2d in a span direction SD.

The root portion 3 is connected to the hub 2d of the blade body 2 and extended in one direction to be fit into a groove (dovetail groove) of a rotor (not shown) to which the fan blade 1 is attached. The extending direction of the root portion 3 may coincide with the X direction.

The root portion 3 is mounted on the mounting surface 11a of the base 11 (see FIG. 2). The root portion 3 has a pair of side surfaces 3a and 3a (see FIG. 2) and a bottom surface 3b (see FIG. 2). The root portion 3 has a cross-sectional shape complementary to the cross-sectional shape of the groove portion (not shown). That is, the root portion 3 includes a width that extends in the Y direction as it moves away from the blade body 2. A pair of side surfaces 3a and 3a are slopes defining this width. The bottom surface 3b is located between the side surfaces 3a and 3a and connects to each side surface. When the root portion 3 is mounted on the mounting surface 11a of the base 11, the bottom surface 3b contacts the mounting surface 11a.

As shown in FIGs. 2 and 3, the jig 10 includes a base 11, a top plate 12, and pressing members 14. Each pressing member 14 is composed of a bolt 15 formed integrally with a screw part 14a and a head part 14b. Alternatively, the pressing member 14 may be composed of a screw part 14a formed as a stud bolt and a nut 14c screwed into the screw part 14a (see FIG. 2). By tightening the bolt 15 in the former case and the nut 14c in the latter case, the top plate 12 is pressed toward the base 11. Hereinafter, for convenience of explanation, the bolt 15 will be described as an example of the pressing member 14.

The base 11 is a flat plate having a predetermined thickness in the Z direction and extending in X and Y directions. The base 11 is formed of a metal having high rigidity such as stainless steel. The thickness of the base 11 is set to a value to obtain sufficient rigidity against the axial force of the bolt 15 during fastening and the stress during vibration. The base 11 is installed on a vibration table (not shown) of the vibration test apparatus and is fixed thereto by a fastening member such as a bolt in a state where the direction of the base 11 is adjusted to obtain a desired vibration direction.

The base 11 includes a mounting surface 11a on which the root portion 3 is mounted. The mounting surface 11a faces the top plate 12. For example, the mounting surface 11a is formed as an upper surface of the mounting stage 11b projecting from the base 11 toward the top plate 12. The height of the mounting stage 11b according to the present embodiment is set to a value capable of maintaining a gap between the base 11 and the top plate 12 when the top plate 12 presses the root portion 3 against the mounting surface 11a.

The top plate 12 is a rectangular flat plate having a predetermined thickness in the Z direction and extending in X and Y directions. The top plate 12 is placed on the base 11 with a gap therebetween. Similar to the base 11, the top plate 12 is formed of a metal having high rigidity such as stainless steel. The thickness of the top plate 12 is set to a value to obtain sufficient rigidity against the axial force of the bolt 15 during fastening and the stress during vibration. The shape of the top plate 12 is not limited to a rectangular shape and may be a circular shape or the like.

The top plate 12 has a slot (holding groove) 16 in which at least a part of the root portion 3 is accommodated. The slot 16 extends in the X direction. The slot 16 opens on an upper surface 12a of the top plate 12 and also opens on a lower surface 12b of the top plate 12 as an insertion port 18 of the mounting table 11b. A part of the root portion 3 including the bottom surface 3b is accommodated in the slot 16. A wedge fitting groove 13 (described later) is provided on both sides of the slot 16 in the extending direction (i.e., the X direction).

The slot 16 has an inner surface 16a for pressing the root portion 3 located in the slot 16 toward the mounting surface 11a. That is, the cross section of the slot 16 orthogonal to the X direction includes an outline corresponding to the side surfaces 3a and 3a of the root portion 3 located in the slot 16. As a result, a part of the inner surface 16a contacts the pair of side surfaces 3a and 3a of the root portion 3.

The depth of the slot 16 along the Z direction is deeper than the length of a part of the root portion 3 along the Z direction, the part being accommodated in the slot 16. Further, a part of the slot 16 on a lower surface 12b side has a width wider than the width of the root portion 3 along the Y direction. Thus, when the root portion 3 is inserted into the slot 16 through the insertion port 17, a sufficient gap is formed between the root portion 3 and the inner surface 16a of the slot 16, and the root portion 3 can be easily inserted into the slot 16.

The top plate 12 has the wedge fitting groove 13 extending in the X direction. As described above, the wedge fitting groove 13 is located on both sides in the extending direction of the slot 16 with respect to the slot 16. The wedge fitting groove 13 is arranged in a line in the X direction together with the slot 16 and communicates with the slot 16. The wedge fitting groove 13 is opened to the top surface 12a of the top plate 12 and the side surface 12c of the top plate 12. The cross-sectional shape of the wedge fitting groove 13 is included in the cross-sectional shape of the slot 16, when viewed from the X direction. In other words, the cross-sectional shape of the wedge fitting groove 13 coincides with a part of the cross-sectional shape of the slot 16, when viewed from the X direction. Therefore, the wedge fitting groove 13 functions as an insertion port 17 of the root portion 3.

An inner surface of the wedge fitting groove 13 includes at least a bottom surface 13a and a pair of holding surfaces 13s and 13s. The bottom surface 13a is a plane parallel to the X-Y plane and also serves as a top surface of the link portion 19 between a plate portion 12A on one side sandwiching the slot 16 and a plate portion 12B on the other side. The pair of holding surfaces 13s and 13s are formed, for example, on at least a part of the pair of side surfaces 13b and 13b. The pair of holding surfaces 13s and 13s are located on both sides of the wedge fitting groove 13 in the width direction (Y direction) and face the bottom surface 13a across an inner space of the wedge fitting groove 13. The pair of holding surfaces 13s and 13s are inclined to the bottom surface 13a.

The bolts 15 are arranged in the X direction on the top plate 12 and are screwed to screw holes 20 provided on the base 11 through the top plate 12. When each bolt 15 is tightened, the top plate 12 moves toward the base 11. Therefore, when the bolt 15 is tightened while the root portion 3 has been inserted into the slot 16 and placed on the mounting stage 11b, the top plate 12 gradually descends, and the inner surface 16a of the slot 16 contacts the side surfaces 3a and 3a of the root portion 3. On the other hand, the root portion 3 cannot descend because it is placed on the mounting stage 11b. Therefore, when the bolt 15 is tightened further, the inner surface 16a of the slot 16 presses the side surfaces 3a and 3a of the root portion 3, and the root portion 3 is pressed against the mounting surface 11a of the mounting stage 11b. Thus, the fan blade 1 is held by the jig 10.

A strain sensor 22 is embedded in each bolt 15. The strain sensor 22 measures the axial force generated in the bolt 15. When the bolt 15 is tightened, a constant axial force can be set for each bolt 15 by confirming the axial force measured by the strain sensor 22. Therefore, a uniform load can be applied to the root portion 3 and the jig 10.

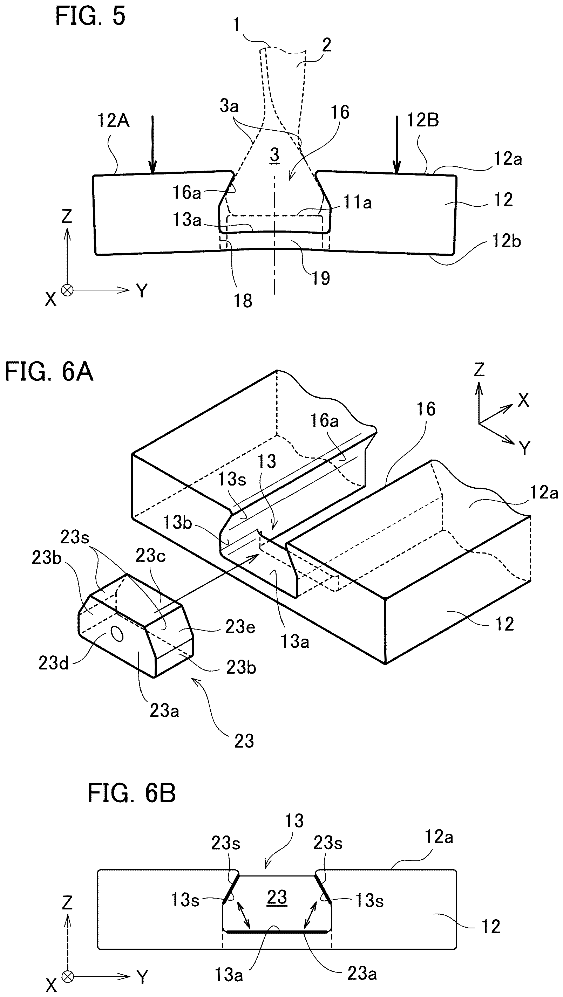

However, the load applied to the jig 10 varies periodically in accordance with the vibration of the fan blade 1. When this variation is excessively large, deformation of the top plate 12 leading to open the slot 16 occurs (see FIG. 5), and the load on the root portion 3 decreases. When the load on the root portion 3 is excessively reduced, the root portion 3 may move in the slot 16. Therefore, the jig 10 according to the present embodiment includes a wedge portion 23 that fits into the wedge fitting groove 13. The wedge portion 23 makes surface contacts with the bottom surface 13a, which is the inner surface of the wedge fitting groove 13, and the pair of holding surfaces 13s and 13s.

FIG. 6A is a perspective view showing a state before the wedge portion 23 is fitted into the wedge fitting groove 13 of the top plate 12, and FIG. 6B is a front view showing a state after the wedge portion 23 is fitted into the wedge fitting groove 13 of the top plate 12. As shown in FIG. 6A, the wedge portion 23 is a block made of metal. The wedge portion 23 is formed of the same metal material as the top plate 12 or a metal material having higher rigidity than that of the top plate 12. Such a material may be, for example, stainless steel or chromium molybdenum steel (SCM).

The wedge portion 23 has a bottom surface 23a, a pair of side surfaces 23b and 23b, a top surface 23c, a front surface 23d, and a rear surface 23e. The bottom surface 23a, a pair of side surfaces 23b and 23b, and a top surface 23c define the cross-sectional shape of the wedge portion 23 that fits into the wedge fitting groove 13. The defined cross-sectional shape coincides with, for example, the cross-sectional shape of the wedge fitting groove 13. The pair of side surfaces 23b and 23b includes a pair of inclined surfaces 23s and 23s. The pair of inclined surfaces 23s and 23s are inclined to the bottom surface 23a at the same angle as the pair of holding surfaces 13s and 13s while facing the bottom surface 23a.

As shown in FIG. 6B, when the wedge portion 23 is fitted into the wedge fitting groove 13, the bottom surface 23a of the wedge portion 23 comes into surface contact with the bottom surface 13a of the wedge fitting groove 13. Further, the inclined surface 23s which is a part of the side surface 23b of the wedge portion 23 comes into surface contact with the holding surface 13s of the wedge fitting groove 13. The arrow in FIG. 5 indicates a load for warping the top plate 12 in the Z direction with respect to the X-Y plane. When this load is applied to the top plate 12, an increase in a local pressure occurs at the periphery of the contact surface between the inclined surface 23s of the wedge portion 23 and the holding surface 13s of the wedge fitting groove 13. By an increase in the friction force there, the relative movement between the wedge portion 23 and the wedge fitting groove 13 along the contact surface is regulated. The holding surface 13s of the wedge fitting groove 13 is in surface contact with the inclined surface 23s, and the bottom surface 23a of the wedge portion 23 is in surface contact with the bottom surface 13a of the wedge fitting groove 13. Therefore, even if the bottom surface 13a of the wedge fitting groove 13 (i.e., the link portion 19 of the top plate 12) would be warped bent in the Y-Z plane, the movement of the wedge portion 23 in the Z direction is restricted. Accordingly, the warpage of the bottom surface 13a (the link portion 19 of the top plate 12) is restricted. That is, the deformation of the top plate 12 to expand the opening of the slot 16, which opens toward the Z direction, is suppressed, and the excessive reduction of the load on the root portion 3 in the slot 16 is suppressed. Therefore, the fan blade 1 can be stably held even during the vibration of the fan blade 1.

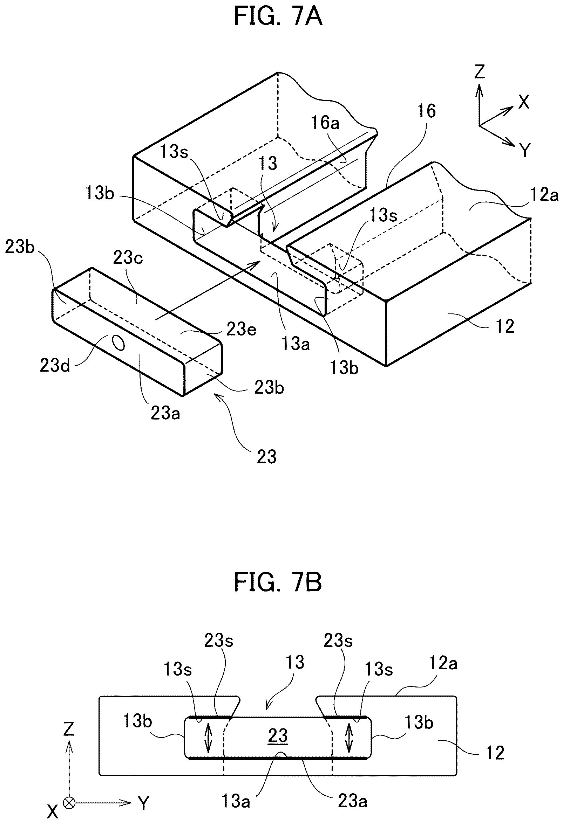

FIG. 7A is a perspective view showing a state before the wedge portion 23 of the modified example is fitted into the wedge fitting groove 13 of the modified example. FIG. 7B is a front view showing a state after the wedge portion 23 is fitted into the wedge fitting groove 13. As shown in these views, the pair of holding surfaces 13s and 13s in the wedge fitting groove 13 may be parallel to the bottom surface 13a. For example, the wedge fitting groove 13 includes a rectangular cross section whose long sides are defined by the pair of holding surfaces 13s and 13s and the bottom surface 13a. The wedge portion 23 has a cross section complementary to this rectangular cross section and fits into the wedge fitting groove 13. In this case, the top surface 23c of the wedge portion 23 makes surface contact with the pair of holding surfaces 13s and 13s of the wedge fitting groove 13, and the bottom surface 23a of the wedge portion 23 makes surface contact with the bottom surface 13a of the wedge fitting groove 13. That is, in this example as well, since the wedge portion 23 makes surface contact with the pair of holding surfaces 13s and 13s and the bottom surface 13a of the wedge fitting groove 13, the warpage of the bottom surface 13a (the link portion 19 of the top plate 12) of the wedge fitting groove 13 is restricted. Accordingly, the fan blade 1 can be stably held even during the vibration of the fan blade 1.

When performing the vibration test, firstly, the root portion 3 of the fan blade 1 is inserted into the insertion port 17 and further moved to the slot 16, and the root portion 3 is positioned on the mounting surface 11a. Next, the wedge portion 23 is inserted into the wedge fitting groove 13. Thereby, the root portion 3 is restricted from being detached from the slot 16. Further, all bolts 15 are gradually tightened until desired axial forces are obtained while changing the bolt 15 to be tightened. At this time, in order to avoid that only a group of some bolts 15 that are close to each other are extremely tightened (so-called one-sided tightening), after one of the bolts 15 is tightened, the other of the bolts 15, which is sufficiently separated from the one bolt 15 already tightened, is tightened. As a result, the bottom surface 3b of the root portion 3 comes into contact with the mounting surface 11a, and the root portion 3 is pressed toward the mounting surface 11a by the inner surface 16a of the slot 16, thereby restricting the movement of the root portion 3. That is, the fan blade 1 is held by the jig 10. Further, the jig 10 stably holds the fan blade 1 even during vibration by fitting the wedge portion 23 to the wedge fitting groove 13.

It should be noted that the present disclosure is not limited to the foregoing embodiments, but is illustrated by the description of the claims, and further includes all changes within the meaning and scope of the description and equality of the claims.

## Claims

1. A vibration test jig for holding an end of a test body extending in a predetermined direction, comprising:
a base installed on a vibration table, including a mounting surface on which the end of the test body is mounted;
a top plate placed on the base with a gap therebetween, including a slot and a wedge fitting groove, the slot having an inner surface that presses the end of the test body toward the mounting surface, and the wedge fitting groove located in an extending direction of the slot and communicating with the slot;
a wedge portion configured to be fit into the wedge fitting groove; and
pressing members arranged along the slot and configured to press the top plate toward the base; wherein
an inner surface of the wedge fitting groove includes a bottom surface and a pair of holding surfaces located on both sides in a width direction of the wedge fitting groove and facing the bottom surface across an inner space of the wedge fitting groove; and
the wedge portion is in surface contact with the bottom surface and the pair of holding surfaces.

2. The vibration test jig according to claim 1, wherein
a cross-sectional shape of the wedge fitting groove is included in a cross-sectional shape of the slot, when viewed from an extending direction of the slot.

3. The vibration test jig according to claim 1, wherein
the pair of holding surfaces is inclined with respect to the bottom surface.

4. The vibration test jig according to claim 1, wherein
the pair of holding surfaces is parallel to the bottom surface.
